# EUROPEAN PATENT SPECIFICATION

(11) **EP 4 096 279 B1**
(45) Date of publication and mention of the grant of the patent: **10.09.2025**
(21) Application number: 20915403.8
(22) Date of filing: 20.01.2020
(51) Int. Cl.: H04W 36/00, H04W 72/23, H04W 24/10, H04W 8/24

(54) **DATA TRANSMISSION METHOD AND APPARATUS, COMMUNICATION DEVICE, AND STORAGE MEDIUM**
DATENÜBERTRAGUNGSVERFAHREN UND -GERÄT, KOMMUNIKATIONSVORRICHTUNG UND SPEICHERMEDIUM
PROCÉDÉ ET APPAREIL DE TRANSMISSION DE DONNÉES, DISPOSITIF DE COMMUNICATION ET SUPPORT DE STOCKAGE

(43) Date of publication of application: 30.11.2022
(73) Proprietor: Beijing Xiaomi Mobile Software Co., Ltd., Beijing 100085 (CN)
(72) Inventor: LI, Yuanyuan, Beijing 100085 (CN)
(74) Representative: Dehns Germany Partnerschaft mbB
(86) International application number: PCT/CN2020/073337
(87) International publication number: WO 2021/146872

(56) References cited:
- EP-A1- 2 296 422
- EP-A1- 3 567 966
- AU-A1- 2013 273 805
- CN-A- 101 686 551
- CN-A- 101 959 319
- CN-A- 110 062 413
- US-A1- 2019 059 093
- US-A1- 2019 319 748
- MEDIATEK INC.: "The needs of Measurement Gap in NR", 3GPP DRAFT; R4-1710670 NEEDS OF GAP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Dubrovnik; 20171009 - 20171013, 8 October 2017 (2017-10-08), Mobile Competence Centre ; 650, route des Lucioles ; F-06921 Sophia-Antipolis Cedex ; France, XP051345480

## Description

### TECHNICAL FIELD

The disclosure relates to, but is not limited to, a field of wireless communication technologies, and more particularly, to a semi-persistent scheduling, SPS, and measurements.

### BACKGROUND

In the fifth generation (5G, 5^{th} Generation) cellular mobile communication technology New Radio (NR) system, when performing mobility measurement, the user equipment (UE) may periodically measure reference signals of neighboring cells. In the case that the receiver bandwidth of the UE is not wide enough to cover both the carrier frequency of the serving cell and the carrier frequency of the neighboring cells, the UE can measure the neighboring cells at a certain time interval, and the base station can configure the measurement gap of the inter-frequency measurement for the UE. For example, the measurement gap repetition period is 40ms, the measurement gap length is 6ms, and the measurement gap offset is 20ms. In this case, the measurement gap is at 20~25ms, 60-65ms and 100-105ms. Here, the neighboring cells may be referred to as inter-frequency cells.

For the inter-frequency cells, the UE may also monitor the Synchronized Signal Block (SSB) of the inter-frequency cells. The base station can set the SSB Measurement Timing Configuration (SMTC) for the UE. Setting the SMTC includes setting the monitoring period, the offset, the duration, and the cell identity (ID) of the monitored SSB. The UE will monitor the SSB of the inter-frequency cells within the specified duration. For example, the monitoring period is 80ms, the offset is 40ms, and the duration is 5ms. In this case, the UE will monitor the SSB of the neighboring cells at 40~44ms, 120~124ms, 200~204ms, and so on.

US 2019/0319748 A1 permits selective multiplexing of synchronization signal blocks (SSBs), inside of or outside of an SSB measurement timing configuration (SMTC) window, and downlink channel communications depending on one or more factors, which may increase spectral efficiency due to multiplexing when permitted, and may prevent or reduce collisions and interference when not permitted.

EP 3567966 A1 relates to a semi-persistent scheduling method. The method includes: determining, by a network device, a semi-persistent scheduling SPS configuration parameter, where the SPS configuration parameter includes an SPS period length, symbol information, and an SPS activation command, where the SPS activation command is used to indicate a system frame number and a sub-frame number of a first time-frequency resource available for sending or receiving SPS data, and the symbol information is used to indicate a location of a symbol that is in a subframe and that is occupied by the time-frequency resource for sending or receiving the SPS data; determining, by the network device based on the SPS period length, the symbol information, and the SPS activation command, resource locations of time-frequency resources available for sending or receiving the SPS data; and sending, by the network device, the SPS configuration parameter to a terminal device.

AU 2013273805 A1 relates to a method for processing a measurement gap. The method includes: receiving a radio resource control RRC assignment on a downlink for a measurement gap for tuning from a source carrier frequency to a target carrier frequency; determining a scheduling conflict arising from physical downlink control channel PDCCH occurring before the measurement gap; and performing a medium access control MAC process in accordance with a protocol predefined for the scheduling conflict by, canceling uplink shared channel UL-SCH first transmission or retransmission

### SUMMARY

In view of this, embodiments of the disclosure provide methods, devices and a storage medium.

According to a first aspect of the invention, there is provided a method as defined by claim 1.

According to a second aspect of the disclosure, there is provided a method as defined by claim 8.

According to another aspect of the disclosure, there is provided a communication device according to claim 12.

According to another aspect of the disclosure, there is provided a storage medium according to claim 13.

Generally, if the receiver bandwidth of the UE is insufficient to cover both the carrier frequency of the serving cell and the carrier frequency of the inter-frequency cell, the UE will stop receiving the downlink data and perform the inter-frequency signal measurement, thereby improving the latency of receiving the downlink data. With the methods in accordance with embodiments of the disclosure, the UE can receive the downlink signal of the serving cell within the measurement window of the inter-frequency signal measurement, thereby reducing the happening of the situation that the downlink data transmission is stopped due to the inter-frequency signal measurement, reducing the transmission latency of the downlink signal, and meeting the low-latency requirement of the data transmission.

It should be understood that the foregoing general description and the following detailed description are examples and are explanatory only and are not limitations of the embodiments of the disclosure.

### BRIEF DESCRIPTION OF THE DRAWINGS

The accompanying drawings, which are incorporated in and constitute a part of this specification, illustrate embodiments consistent with the disclosure and serve to explain the principles of the embodiments of the disclosure together with the description .
FIG. 1 is a schematic diagram illustrating a data transmission system in accordance with an embodiment of the disclosure.
FIG. 2 is a flowchart illustrating a data transmission method in accordance with an embodiment of the disclosure.
FIG. 3 is a schematic diagram illustrating positions of transmission window and measurement window in accordance with an embodiment of the disclosure.
FIG. 4 is a schematic diagram illustrating positions of transmission window and measurement window in accordance with another embodiment of the disclosure.
FIG. 5 is a schematic diagram illustrating positions of transmission window and measurement window in accordance with still another embodiment of the disclosure.
FIG. 6 is a schematic diagram illustrating positions of transmission window and measurement window in accordance with yet another embodiment of the disclosure.
FIG. 7 is a schematic diagram illustrating positions of transmission window and measurement window in accordance with yet another embodiment of the disclosure.
FIG. 8 is a flowchart illustrating a data transmission method in accordance with an embodiment of the disclosure.
FIG. 9 is a block diagram illustrating a data transmission apparatus in accordance with an embodiment of the disclosure.
FIG. 10 is a block diagram illustrating a data transmission apparatus in accordance with another embodiment of the disclosure.
FIG. 11 is a block diagram illustrating a data transmission device in accordance with an embodiment of the disclosure.

### DETAILED DESCRIPTION

Embodiments will be described in detail herein, examples of which are illustrated in the accompanying drawings. In the following description related to the drawings, the same numerals in different drawings refer to the same or similar elements unless otherwise indicated. The implementations described in the following embodiments do not represent all implementations consistent with embodiments of the disclosure. Rather, they are merely examples of apparatus and methods consistent with some aspects of embodiments of the disclosure as recited in the appended claims.

The terms used in the embodiments of the disclosure are only for the purpose of describing particular embodiments, and are not intended to limit the embodiments of the disclosure. As used in the embodiments of the description and the appended claims, the singular forms "a," "an," and "the" are intended to include the plural forms as well, unless the context clearly dictates otherwise. It is understandable that the term "and/or" as used herein refers to and includes any one and all possible combinations of one or more of the associated listed items.

It is understandable that although the terms first, second, third, etc. may be used in embodiments of the disclosure to describe various pieces of information, such information should not be limited to these terms. These terms are only used to distinguish the same type of information from each other. For example, the first information may also be referred to as the second information, and similarly, the second information may also be referred to as the first information without departing from the scope of the embodiments of the disclosure. Depending on the context, the word "if" as used herein can be interpreted as "at the time of" or "when" or "in response to determining."

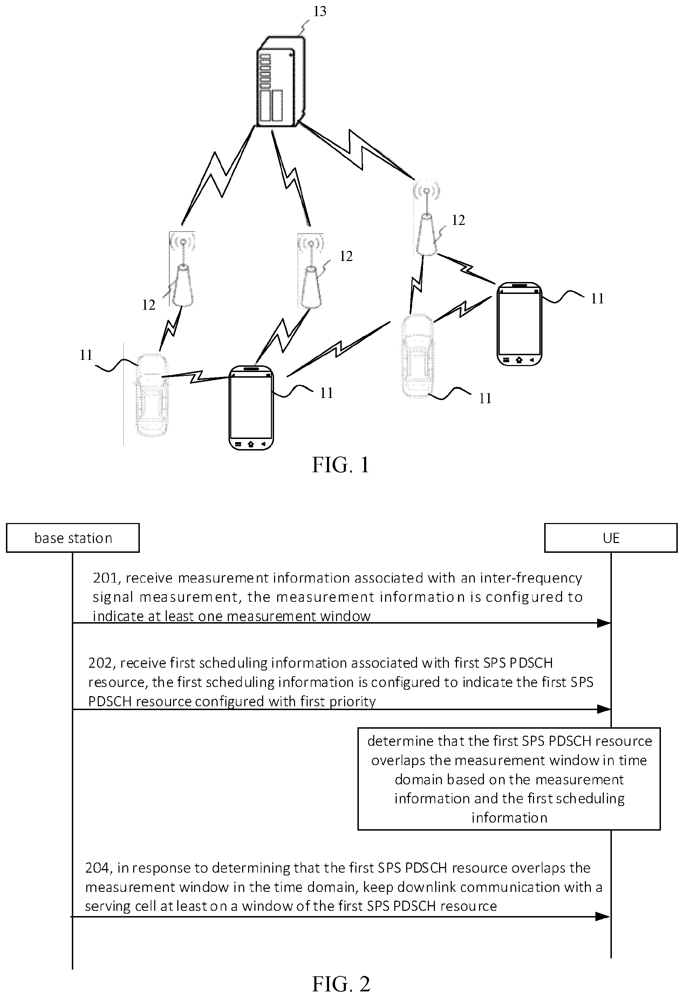

FIG. 1 is a schematic diagram illustrating a wireless communication system which does not fall within the scope of the invention, and is provided for illustrative purposes. As illustrated in FIG. 1, the wireless communication system is a communication system based on the cellular mobile communication technology. The wireless communication system may include several terminals 11 and several base stations 12.

The terminal 11 may be a device that provides voice and/or data connectivity to the user. The terminal 11 may communicate with one or more core networks via a Radio Access Network (RAN). The terminal 11 may be an Internet of Thing (IoT) terminal such as a sensor device, a mobile phone (or "cellular" phone), or a computer with an IoT terminal, such as a fixed device, a portable device, a pocket device, a hand-held device, a computer built-in device or a vehicle-mounted device. For example, Station (STA), subscriber unit, subscriber station, mobile station, mobile, remote station, access point, remote terminal, access terminal, user terminal, user agent, user device, or user equipment (UE). Alternatively, the terminal 11 may be a device of unmanned aerial vehicle. Alternatively, the terminal 11 may be a vehicle-mounted device, such as a trip computer with a wireless communication function, or a wireless communication device externally connected to the trip computer. Alternatively, the terminal 11 may be a roadside device, such as a street light, a traffic light, or other roadside devices with a wireless communication function.

The base station 12 may be a network-side device in the wireless communication system. The wireless communication system may be the 4th generation mobile communication (4G) system, also known as Long Term Evolution (LTE) system. Alternatively, the wireless communication system may be a 5th generation mobile communication (5G) system, also known as new radio (NR) system or 5G NR system. Alternatively, the wireless communication system may be a next-generation system of the 5G system. The access network in the 5G system may be called New Generation-Radio Access Network (NG-RAN). Alternatively, the wireless communication system can be a Machine Type Communication (MTC) system.

The base station 12 may be an evolved base station (eNB) of the 4G system. Alternatively, the base station 12 may be a base station (gNB) that adopts a centralized-distributed architecture of the 5G system. When adopting the centralized-distributed architecture, the base station 12 usually includes a central unit (CU) and at least two distributed units (DU). The central unit is provided with a protocol stack of Packet Data Convergence Protocol (PDCP), Radio Link Control (RLC), and Medium Access Control (MAC). The distributed unit is provided with a protocol stack of a physical (PHY) layer. Embodiments of the disclosure not limit the implementation form of the base station 12.

A wireless connection can be established between the base station 12 and the terminal 11 through a wireless air interface. In different implementations, the wireless air interface can be a wireless air interface based on the 4G or based on 5G, such as the wireless air interface or the new radio, or the wireless air interface can be a wireless air interface based on the next-generation of the 5G.

In some embodiments, an E2E (End to End) connection can be established between terminals 11. For example, Vehicle to Vehicle (V2V) communication, Vehicle to Infrastructure (V2I) and Vehicle to Pedestrian (V2P) communication in the Vehicle to Everything (V2X) communication.

In some embodiments, the above wireless communication system may also include a network management device 13.

The base stations 12 are respectively connected to the network management device 13. The network management device 13 may be a core network device in the wireless communication system. As an example, the network management device 13 may be a Mobility Management Entity (MME) in an Evolved Packet Core (EPC). As another example, the network management device can be another core network device, such as Serving GateWay (SGW), Public Data Network GateWay (PGW), Policy and Charging Rules Function (PCRF), or Home Subscriber Sserver (HSS), etc. Embodiments of the disclosure do not limit the implementation form of the network management device 13.

The execution subject involved in the embodiments of the disclosure includes, but is not limited to, the terminal or the base station that communicate through the 5G technology.

An use scenario of the embodiments of the disclosure is that, in the case that the receiver bandwidth of the UE is not wide enough to cover both the serving carrier frequency of the cell and the serving carrier frequency of the neighboring cells to be measured, the UE can measure the reference signals or the like of the neighboring cells at a certain measurement gap. During the measurement gap configured for the UE to perform the radio measurement on the neighboring cells to be measured, the normal data transmission and reception and possible intra-frequency measurement performed by the UE in the serving cell will be interrupted. After the measurement gap ends, the UE will return to the carrier frequency of the serving cell, and continue the normal data transmission and reception and the possible intra-frequency measurement.

If the receiver bandwidth of the UE is not wide enough to cover both the serving carrier frequency of the cell and the serving carrier frequency of the cell to be measured, the normal data transmission and reception between the UE and the serving cell will be interrupted and the SSB of the neighboring cell is measured during the configured SMTC duration window. After the window ends, the UE will return to the carrier frequency of the serving cell, and continue to perform the normal data transmission and reception.

In the 5G NR, some services require low latency, such as the Ultra Reliable and Low Latency Communication (URLLC) service. This type of services usually requires that the transmitter can obtain transmission resources as soon as possible when there is data to be transmitted, to reduce the latency of the service caused by waiting in the buffer of the transmitter, thereby reducing the transmission latency of the air interface. When the UE measures the inter-frequency signal within the measurement gap or the /SMTC window, the receiver of the UE cannot receive the downlink information of the serving cell, thus causing a latency in data transmission.

As illustrated in FIG. 2, a data transmission method is provided, which is performed by a UE of a wireless communication, which is within the scope of the invention.

The method includes the following.

At block 201, measurement information associated with inter-frequency signal measurement. The measurement information is configured to indicate at least one measurement window.

At block 202, first scheduling information associated with a first semi-persistent scheduling (SPS) physical downlink shared channel (PDSCH) resource. The first scheduling information is configured to indicate that the first SPS PDSCH resource is configured with a first priority.

At block 203, it is determined whether the first SPS PDSCH resource overlaps the measurement window based on the measurement window and the first scheduling information.

At block 204, in response to determining that the first SPS PDSCH resource overlaps the measurement window in the time domain, a downlink communication with a serving cell is kept at least within a window of the first SPS PDSCH resource.

The measurement window may be the above-mentioned measurement gap. The inter-frequency signal may be a signal having a center frequency different from the center frequency of the serving cell where the UE is currently located. Alternatively, the inter-frequency signal refers to a signal of an inter-frequency cell occupying a band width part (BWP) different from the BWP currently occupied UE. Alternatively, the inter-frequency signal refers to a signal an inter-frequency cell having a different center frequency or a different sub-carrier space (SCS) in the SSB measurement. The inter-frequency signal measurement refers to performing signal quality measurement on the inter-frequency signal or monitoring the inter-frequency signal.

Here, keeping the downlink communication with the serving cell may include that the UE receives a downlink signal sent by the serving cell to the UE through the downlink or the UE monitors the downlink signal in the serving cell on the downlink. The downlink signal includes, but is not limited to, control instructions and downlink data sent by the serving cell to the UE.

Similarly, keeping the downlink communication with the UE may include that the serving cell sends the downlink signal to the UE through the downlink when needed or the serving cell keeps the downlink connection with the UE.

In the SPS mode, after the UE applies for a transmission resource once, the corresponding transmission resource will be periodically allocated to the UE within a period of time. The base station configures periodic downlink transmission resources for the UE. The SPS PDSCH resource may be the periodic PDSCH resource configured by the base station in the serving cell for downlink communication. The UE may receive the downlink data in the serving cell using the SPS PDSCH resource.

Here, the first scheduling information may be scheduling information for configuring the SPS PDSCH resource and/or for activating the SPS PDSCH resource. The base station may configure the SPS PDSCH resource for the UE, and when performing the data transmission, the base station can activate the configured SPS PDSCH resource for the data transmission. For example, the SPS PDSCH resource configuration can be configured by the base station through the first scheduling information, and only the value of the period in the configuration is configured. For example, the value of the period is 1 ms. It is possible that the start position of the SPS PDSCH resource in the time domain is not configured by the first scheduling information. The base station may activate the SPS PDSCH resource configuration through the first scheduling information, and may indicate the specific time-frequency position of the first SPS PDSCH resource. For example, the first scheduling information for the activation is sent on a slot n, indicating that the first SPS PDSCH resource is the symbols 2 to 5 of the slot n+1. In this way, the SPS PDSCH resource may be the transmission resource of symbols 2 to 5 of each slot with a period of 1 millisecond (ms). The first scheduling information may be a radio resource control (RRC) configuration signaling and/or downlink control information (DCI).

If the receiver bandwidth of the UE is insufficient to cover both the carrier frequency of serving cell and the carrier frequency of the inter-frequency cell, the UE cannot perform the inter-frequency signal measurement of the inter-frequency cell and the data transmission of the serving cell at the same time. For example, the UE cannot perform the inter-frequency signal measurement and the downlink communication with the serving cell simultaneously during the measurement gap or the UE cannot perform the inter-frequency signal monitoring and receive the downlink signal in the serving cell simultaneously during the configured SMTC duration. The SPS PDSCH resource having the first priority can be configured to transmit the downlink data that requires a low latency, such as the URLLC service data. The first priority is higher than a second priority. The SPS PDSCH resource having the second priority can be configured to transmit the downlink data whose transmission latency requirements are relatively lower than the downlink data transmitted by the SPS PDSCH resource having the first priority, such as the Massive Machine Type Communications (mMTC) service data that the transmission delay requirements are lower than those of URLLC service data. The priority of the SPS PDSCH resource can be configured by the base station through the RRC signaling.

Since both the window of the PDSCH resource scheduled by the SPS mode and the measurement window of inter-frequency signal measurement can be configured by the base station, and the base station uses the RRC signaling or the like to deliver the transmission window and measurement window to the UE, both the base station and the UE may determine in advance whether there is the SPS PDSCH resource having the first priority for transmitting the downlink data within the measurement window of the inter-frequency signal measurement. In response to determining that there is the SPS PDSCH resource having the first priority for transmitting the downlink data within the measurement window of the inter-frequency signal measurement, the UE may stop performing the inter-frequency signal measurement. Stopping the inter-frequency signal measurement may be stopping all the inter-frequency signal measurements within the measurement window, or stopping the inter-frequency signal measurements within the transmission window occupied by the SPS PDSCH resource having the first priority.

The base station may send the first scheduling information indicating the first SPS PDSCH resource configured with the first priority and the measurement information indicating at least one measurement window to the UE. The UE may determine the priority of the first SPS PDSCH resource based on the first scheduling information and determine the measurement window based on the measurement information.

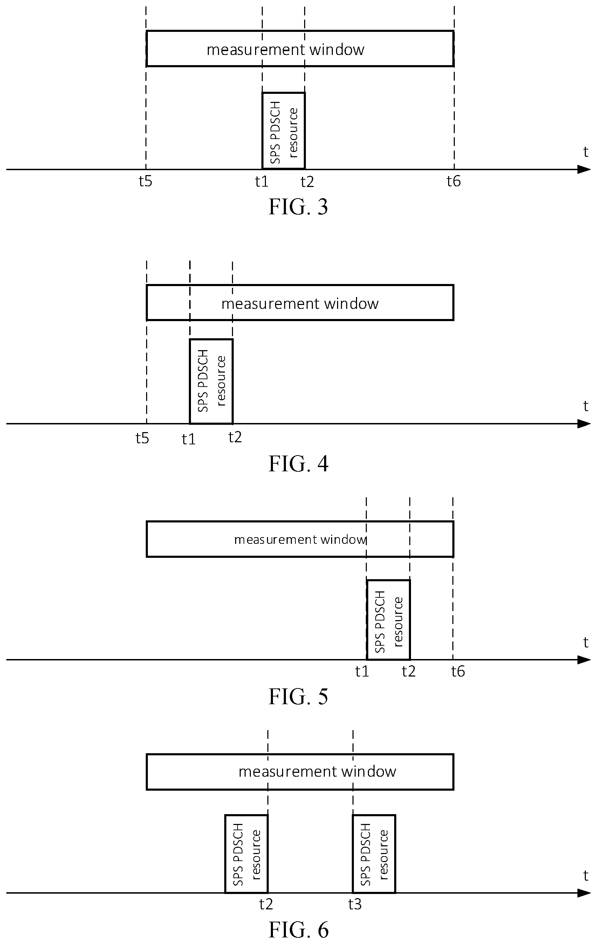

As illustrated in FIG. 3, when the window of the SPS PDSCH resource having the first priority is within the measurement window of the inter-frequency signal measurement performed by the UE, that is, the start time t1 of the SPS PDSCH resource is later than or equal to the start time of the measurement window t5 and the end time t2 of the SPS PDSCH resource is earlier than or equal to the end time t6 of the measurement window, the UE may stop the inter-frequency signal measurement on the SPS PDSCH resource having the first priority. The UE may perform the inter-frequency signal measurement on resources other than the SPS PDSCH resource. The base station can keep transmitting the downlink data within the window of the SPS PDSCH resource having the first priority, not avoiding the measurement window of the inter-frequency signal measurement.

In this way, with the method in accordance with embodiments of the disclosure, the UE can receive the downlink signal of the serving cell within the measurement window of the inter-frequency signal measurement, thereby reducing the situation that the downlink signal transmission is stopped due to the inter-frequency signal measurement, reducing the transmission delay of the downlink signal, and meeting the requirements of low-latency data transmission.

The inter-frequency signal measurement includes reference signal measurement performed by the UE on the inter-frequency cell and/or synchronization signal block (SSB) monitoring performed by the UE on the inter-frequency cell.

The measurement window during which the UE performs the inter-frequency signal measurement on the inter-frequency cell includes the measurement window during which the UE performs reference signal measurement on the inter-frequency cell and/or the duration window during which the UE performs SSB monitoring on the inter-frequency cell.

Here, the reference signal measurement may be that the UE measures a reference signal of an inter-frequency cell when performing mobility measurement. The UE may measure the reference signal of the inter-frequency cell at intervals. The base station may configure the periodic measurement gap for the UE. The UE may stop the reference signal measurement when performing the downlink SPS data transmission having the first priority.

The base station may configure a periodic duration window for the UE to monitor the SSB of the inter-frequency cell. The UE may stop monitoring the SSB of the inter-frequency cell when performing the downlink SPS data transmission having the first priority.

In some embodiments, the block 204 may include determining that a time difference between the start time of the measurement window and the start time of one of the at least one first SPS PDSCH resource is less than or equal to a time length threshold; keeping the downlink communication with the serving cell during a time period between the start time of the measurement window and the start time of the one of the at least one SPS PDSCH resource; and performing the inter-frequency signal measurement after the window of the one of the at least one SPS PDSCH resource.

Here, the one of the at least one first SPS PDSCH resource may be any one of the at least one first SPS PDSCH resource within the measurement window, or may be the first one of the at least one first SPS PDSCH resource within the measurement window.

Since the receiver of the UE needs a certain handover time period for the handover between the carrier frequency of the serving cell and the carrier frequency of the inter-frequency cell, within is a time duration that the UE perform the carrier frequency handover once, when the time period between the start time of the measurement window and the start time of the first SPS PDSCH resource is less than the twice of the handover time period, the UE cannot return back to the carrier frequency of the serving cell during this time period, and thus the UE cannot complete the handover process. This results in useless handover operations and even delays in the downlink data transmission on the first SPS PDSCH resource. Therefore, in order to avoid the above situation, the base station may configure the time length threshold based on at least the handover time period. The time length threshold may be greater than or equal to the twice of the handover time period. In some examples, the base station can configure the time length threshold based on factors other than the carrier frequency handover time period of the UE. The other factors include, for example, resource configuration status of the system, global configuration of the base station, channel quality, and the like. Here, keeping the downlink communication with the serving cell may be that the receiver of the UE keeps the downlink communication with the serving cell without monitoring the signal of the inter-frequency cell.

As illustrated in FIG. 4, the SPS PDSCH resource having the first priority is within the measurement window during which the UE performs the inter-frequency signal measurement and the time difference from the start time t5 of the measurement window to the start time t1 of the SPS PDSCH resource is less than or equal to the time length threshold. In the case that the inter-frequency signal measurement is performed between t5 and t1, since the UE needs to perform the carrier frequency handover twice, considering the time required for the inter-frequency signal measurement and the inter-frequency handover time period of the UE, it may be determined that the UE cannot switch to the carrier frequency of the serving cell for the downlink communication from the start time t5. Therefore, when the time difference between the start time t5 of the measurement window to the start time t1 of the SPS PDSCH resource is less than or equal to the time length threshold, the UE will keep receiving the downlink information in the serving cell during the time period from t5 to t1, without performing the inter-frequency signal measurement, and the UE can perform the inter-frequency signal measurement after the end time t2 of the transmission window.

In this way, happening of the case that the UE cannot switch to the carrier frequency of the serving cell timely from the start time of the SPS PDSCH resource caused by performing the handover between the carrier frequency of the inter-frequency cell and the carrier frequency of the serving cell before the first SPS PDSCH resource can be reduced. Therefore, the reliability of the downlink data reception during the transmission window can be improved and invalid carrier frequency handover can be reduced.

In some embodiments, which are not within the scope of the invention, and are provided for illustrative purposes, the block 204 may include in response to determining that the time difference between the end time of the measurement window and the end time of one of the at least one first SPS PDSCH resource is less than or equal to the time length threshold, keeping the downlink communication with the serving cell during the time period between the end time of the one of the at least one first SPS PDSCH resource and the end time of the measurement window.

Here, the one of the at least one first SPS PDSCH resource may be any one or the last one of the at least one first SPS PDSCH resource within the measurement window.

In the case that the time period between the end time of the measurement window and the end time of the SPS PDSCH resource is less than or equal to the time length threshold, since the UE needs to perform the carrier frequency handover twice, after performing inter-frequency signal measurement within this time period, it is determined that there is no enough time for the UE to switch to the carrier frequency of the serving cell at the end of the measurement window. Therefore, the UE can keep receiving the downlink information in the serving cell during this window, without performing inter-frequency signal measurement.

As illustrated in FIG. 5, the SPS PDSCH resource is within the measurement window during which the UE performs the inter-frequency signal measurement and the time period from the end time t2 of the SPS PDSCH resource to the end time t6 of the measurement window is less than or equal to the time length threshold. If the inter-frequency signal measurement is performed from t2 to t6, since the UE needs to perform the carrier frequency handover twice, considering the time period occupied by the inter-frequency signal measurement and the inter-frequency handover time period of the UE, it can be determined that the UE cannot switch to the carrier frequency of the serving cell at t6. Therefore, when the time period from the end time t2 of the SPS PDSCH resource to the end time t6 of the measurement window is less than or equal to the inter-frequency handover time period of the UE, the UE can keep receiving the downlink information in the serving cell from t2 to t6, and does not perform the inter-frequency signal measurement.

In this way, the happening of the case that the UE cannot switch to the carrier frequency of the serving cell timely for the downlink communication after the end of the measurement window caused by performing the inter-frequency signal measurement and the downlink communication handover from the end time of the measurement window to the end time of the SPS PDSCH resource. In addition, the invalid carrier frequency handover can be reduced.

In some embodiments, which are not within the scope of the invention, and are provided for illustrative purposes, the block 204 may include in response to determining that a time period between two adjacent first SPS PDSCH resources of at least two first SPS PDSCH resources within the measurement window is less than or equal to the time length threshold, keeping the downlink communication with the serving cell during the time period.

There may be two or more SPS PDSCH resources within one measurement window. During the time period between two adjacent SPS PDSCH resources, if it needs to perform the inter-frequency signal measurement, the UE needs to switch from the carrier frequency of the serving cell to the carrier frequency of the inter-frequency cell, performs the inter-frequency signal measurement, and switches from the carrier frequency of the inter-frequency cell to the carrier frequency of the serving cell for the downlink communication. Therefore, the UE requires a certain handover time period. The UE or the base station may set the time length threshold to be greater than or equal to the twice of the handover time period. If the time period left for the UE to perform the carrier frequency handover twice is less than or equal to the time length threshold, it is determined that the UE cannot complete the carrier frequency handover twice when the time period ends. Therefore, if the time period between two SPS PDSCH resources is less than or equal to the time length threshold, the UE keeps the downlink communication with the serving cell without performing the inter-frequency signal measurement.

As illustrated in FIG. 6, multiple SPS PDSCH resources are within the measurement window during which the UE performs the inter-frequency signal measurement. In the two adjacent SPS PDSCH resources, the time period from the end time t2 of the earlier SPS PDSCH resource to the start time t3 of the later SPS PDSCH resource is less than or equal to the time length threshold. If the inter-frequency signal measurement is performed between t2 and t3, considering the time period occupied by the inter-frequency signal measurement and the time period of performing the carrier frequency handover twice by the UE, it can be determined that the UE cannot switch to the carrier frequency of the serving cell for the downlink communication at t3. Therefore, the UE can keep receiving downlink information in the serving cell during the time period from t2 to t3, without performing the inter-frequency signal measurement.

In this way, the happening of the case that the UE cannot switch to the carrier frequency of the serving cell in time after the time period between the two adjacent SPS PDSCH ends caused by performing the handover between the carrier frequency of the inter-infrequency cell and the carrier frequency of the serving cell during the time period between the two adjacent SPS PDSCH resources. At the same time, invalid carrier frequency handover can be reduced.

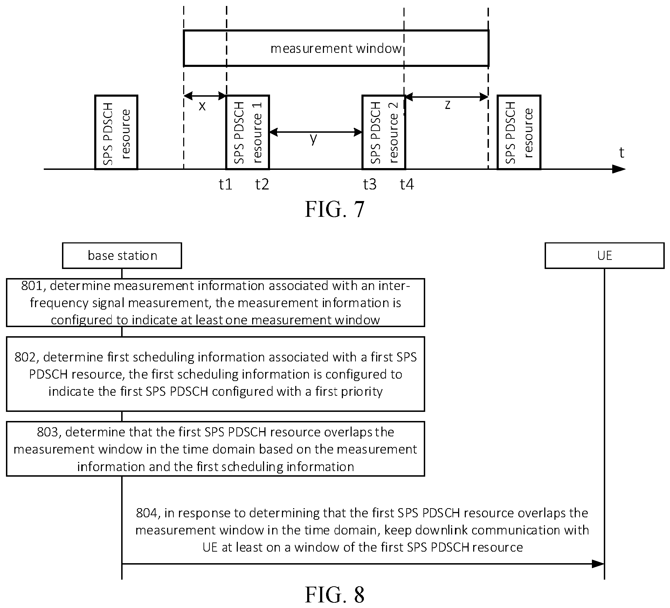

As illustrated in FIG. 7, there are two SPS PDSCH resources within the measurement window during which the UE performs the inter-frequency signal measurement.

In FIG. 7, X represents the time period from the start time of a first one of the transmission windows occupied by the two SPS PDSCH resources to the start time of the measurement window. In the case that X is less than or equal to the time length threshold, the inter-frequency signal measurement is performed after the first transmission window. That is, the UE keeps the downlink communication with the serving cell within the time period X, without performing the inter-frequency signal measurement.

In FIG. 7, Y represents the time period from the end time of the first one of the two SPS PDSCH resources to the start time of the second one of the two SPS PDSCH resources. In the case that Y is less than or equal to the time length threshold, the UE keeps the downlink communication with the serving cell during the time period Y, without performing the inter-frequency signal measurement.

In FIG. 7, Z represents the time period from the end time of the second one of the two SPS PDSCH resources to the end time of the measurement window. In the case that Z is less than or equal to the time length threshold, the inter-frequency signal measurement is not performed after the second SPS PDSCH resource. That is, the UE keeps the downlink communication with the serving cell during the time period Z, without performing the inter-frequency signal measurement.

In some embodiments, the time length threshold is greater than or equal to the time period that the UE performs the inter-frequency handovers twice.

In the process that the UE switches from the downlink signal received by the serving cell to the carrier frequency of the inter-frequency cell for the inter-frequency signal measurement and then to the downlink signal received by the serving cell, the receiver needs to switch from the carrier frequency of the serving cell to the carrier frequency of the inter-frequency cell, and the UE needs to configure the receiver. The time length threshold may be greater than or equal to the twice of the inter-frequency handover time period of the UE.

During the time period between two adjacent transmission windows, the UE needs to switch from the carrier frequency of the serving cell to the carrier frequency of the inter-frequency cell, performs the inter-frequency signal measurement, and switches from the carrier frequency of the inter-frequency cell to the carrier frequency of the serving cell. Therefore, the UE needs the twice of the inter-frequency handover time period. The time length threshold may be greater than or equal to the twice of the inter-frequency handover time period of the UE.

The time length threshold is greater than or equal to the time period that the UE performs the inter-frequency handover twice. It can be determined that the UE can complete the carrier frequency handover twice.

In this way, the time length threshold is used as the condition for determining whether to perform the handover between the carrier frequency of the inter-frequency cell and the carrier frequency of the serving cell, it may be accurately determined whether there is enough time for the UE to perform the carrier frequency handover between the inter-frequency cell and the serving cell. Therefore, invalid carrier frequency handover can be reduced and it can be ensured that the UE can switch to the carrier frequency of the serving cell for the data transmission within the transmission window or the UE can switch to the carrier frequency of the inter-frequency cell to perform the inter-frequency signal measurement within the measurement window.

In some embodiments, the data transmission method may further include receiving indication information configured to indicate the time length threshold.

Here, the time length threshold may be determined by the base station and sent to the UE through the indication information.

In some embodiments, the data transmission method may further include reporting capability information of the UE. The capability information is used for the base station to determine the time length threshold.

The UE can send the capability information, such as the time period required for performing the carrier frequency handover by the UE, to the base station. The base station may determine the inter-frequency handover time period based on the reported capability information, and send the determined time length threshold to the UE. The base station can separately assign the time length threshold for a UE or assign the determined time length threshold to multiple UEs.

In some embodiments, the data transmission method further includes receiving second scheduling information associated with a second SPS PDSCH resource, in which the second scheduling information is configured to indicate a second SPS PDSCH resource configured with a second priority and the first priority is higher than the second priority, determining, based on the measurement information and the second scheduling information, that the second SPS PDSCH resource overlaps the measurement window in the time domain; and in response to determining that the second SPS PDSCH resource overlaps the measurement window in the time domain, keeping the inter-frequency signal measurement on an overlapping portion where the second SPS PDSCH resource overlaps the measurement window in the time domain.

For the second SPS PDSCH resource having the second priority, the UE may perform the inter-frequency signal measurement within the measurement window.

In some embodiments, keeping the inter-frequency signal measurement on the overlapping portion where the second SPS PDSCH resource overlaps the measurement window in the time domain includes stopping the downlink communication with the serving cell on the overlapped portion where the second SPS PDSCH resource overlaps the measurement window in the time domain.

The base station may stop the downlink communication with the UE on the overlapping portion where the second SPS PDSCH resource overlaps the measurement window in the time domain.

The UE may not use the second SPS PDSCH resource to perform the downlink communication with the serving cell when performing the inter-frequency signal measurement within the measurement window.

In this way, the completion of the inter-frequency signal measurement can be within the measurement window can be ensured, and at the same time, the flexible configuration for the high-priority SPS PDSCH resource and the low-priority SPS PDSCH resource in the inter-frequency signal measurement scenario is achieved.

In some embodiments, the first SPS PDSCH resource is scheduled for a first communication service type. The first communication service type has a higher priority than a second communication service type.

For example, the priority of the URLLC service type is higher than the priority of the mMTC type, such that the first SPS PDSCH resource may be scheduled for the URLLC service type.

In this way, the service data with the higher priority can be not affected by the inter-frequency signal measurement, to reduce the time latency.

In some embodiments, the first SPS PDSCH resource is configured by the RRC signaling to have the first priority.

Here, the base station can configure the SPS PDSCH resource to have the first priority through the RRC signaling. The first priority may be the highest priority, or the first priority may be higher than a preset priority threshold.

For example, the URLLC service has high requirements on the low latency. Therefore, the SPS PDSCH resource used for the downlink data transmission of the URLLC service may be determined to have the first priority. The base station may send the downlink SPS PDSCH resource configuration information and the priority information corresponding to the downlink SPS PDSCH configuration to the UE through the RRC signaling. When the transmission window occupied by the SPS PDSCH resource having the first priority is within the measurement window, the downlink data transmission of the downlink SPS PDSCH having the first priority is performed. In this way, the time latency of the downlink data of the URLLC service can be reduced, and latency requirements of the downlink data transmission of the URLLC service is satisfied.

In the embodiments, keeping the downlink communication with the serving cell on the at least the first SPS PDSCH resource includes at least stopping the inter-frequency signal measurement on the overlapping portion where the first SPS PDSCH resource overlaps the measurement window in the time domain.

During the measurement window, the UE uses the first SPS PDSCH resource to receive the downlink data from the serving cell, and the UE stops performing the inter-frequency signal measurement within the window of the first SPS PDSCH resource.

In this way, the UE can perform the downlink communication with the serving cell within the measurement window of the inter-frequency signal measurement, thereby reducing the happening of the situation that the downlink communication is stopped due to the inter-frequency signal measurement, reducing the transmission delay of the downlink data, and satisfying the requirements for the low-latency data transmission.

As illustrated in FIG. 8, a data transmission method is provided, which is performed by a base station of a wireless communication, which is within the scope of the invention.

The method includes the following.

At block 801, measurement information associated with inter-frequency signal measurement is determined. The measurement information is configured to indicate at least one measurement window.

At block 802, first scheduling information associated with the first SPS PDSCH resource is determined. The first scheduling information is configured to indicate the first SPS PDSCH resource configured with a first priority.

At block 803, it is determined whether the first SPS PDSCH resource overlaps the measurement window in the time domain based on the measurement window and the first scheduling information.

At block 804, in response to determining that the first SPS PDSCH resource overlaps the measurement window in the time domain, downlink communication with the UE is kept at least within a window of the first SPS PDSCH resource.

The inter-frequency signal may be a signal having a center frequency different from the center frequency of the serving cell where the UE is currently located. Alternatively, the inter-frequency signal refers to a signal of an inter-frequency cell occupying a BWP different from the BWP currently occupied UE. Alternatively, the inter-frequency signal refers to a signal an inter-frequency cell having a different center frequency or a different sub-carrier space (SCS) in the SSB measurement. The inter-frequency signal measurement refers to performing signal quality measurement on the inter-frequency signal or monitoring the inter-frequency signal.

Here, keeping the downlink communication with the serving cell may include that the UE receives a downlink signal sent by the serving cell to the UE through the downlink or the UE monitors the downlink signal in the serving cell on the downlink. The downlink signal includes, but is not limited to, control instructions and downlink data sent by the serving cell to the UE.

Similarly, keeping the downlink communication with the UE may include that the serving cell sends the downlink signal to the UE through the downlink when needed or the serving cell keeps the downlink connection with the UE.

In the SPS mode, after the UE applies for a transmission resource once, the corresponding transmission resource will be periodically allocated to the UE within a period of time. The base station configures periodic downlink transmission resources for the UE. The SPS PDSCH resource may be the periodic PDSCH resource configured by the base station in the serving cell for downlink communication. The UE may receive the downlink data in the serving cell using the SPS PDSCH resource.

Here, the first scheduling information may be scheduling information for configuring the SPS PDSCH resource and/or for activating the SPS PDSCH resource. The base station may configure the SPS PDSCH resource for the UE, and when performing the data transmission, the base station can activate the configured SPS PDSCH resource for the data transmission. For example, the SPS PDSCH resource configuration can be configured by the base station through the first scheduling information, and only the value of the period in the configuration is configured. For example, the value of the period is 1 ms. It is possible that the start position of the SPS PDSCH resource in the time domain is not configured by the first scheduling information. The base station may activate the SPS PDSCH resource configuration through the first scheduling information, and may indicate the specific time-frequency position of the first SPS PDSCH resource. For example, the first scheduling information for the activation is sent on a slot n, indicating that the first SPS PDSCH resource is the symbols 2 to 5 of the slot n+1. In this way, the SPS PDSCH resource may be the transmission resource of symbols 2 to 5 of each slot with a period of 1 ms. The first scheduling information may be a radio resource control (RRC) and/or downlink control information (DCI).

If the receiver bandwidth of the UE is insufficient to cover both the carrier frequency of serving cell and the carrier frequency of the inter-frequency cell, the UE cannot perform the inter-frequency signal measurement of the inter-frequency cell and the downlink communication with the serving cell at the same time. For example, the UE cannot perform the inter-frequency signal measurement and the downlink communication with the serving cell simultaneously during the measurement gap or the UE cannot perform the inter-frequency signal monitoring and the downlink communication with the serving cell simultaneously during the configured SMTC duration. The SPS PDSCH resource having the first priority can be configured to transmit the downlink data that requires a low latency, such as the URLLC service data. The first priority is higher than a second priority. The SPS PDSCH resource having the second priority can be configured to transmit the downlink data whose transmission latency requirements are relatively lower than the downlink data transmitted by the SPS PDSCH resource having the first priority, such as the Massive Machine Type Communications (mMTC) service data that the transmission delay requirements are lower than those of URLLC service data. The priority of the SPS PDSCH resource can be configured by the base station through the RRC signaling.

Since both the window of the PDSCH resource scheduled by the SPS mode and the measurement window of inter-frequency signal measurement can be configured by the base station, and the base station uses the RRC signaling or the like to deliver the transmission window and measurement window to the UE, both the base station and the UE may determine in advance whether there is the SPS PDSCH resource having the first priority for transmitting the downlink data within the measurement window of the inter-frequency signal measurement. In response to determining that there is the SPS PDSCH resource having the first priority for transmitting the downlink data within the measurement window of the inter-frequency signal measurement, the UE may stop performing the inter-frequency signal measurement. Stopping the inter-frequency signal measurement may be stopping all the inter-frequency signal measurements within the measurement window, or stopping the inter-frequency signal measurements within the transmission window occupied by the SPS PDSCH resource having the first priority.

The base station may send the first scheduling information indicating the first SPS PDSCH resource configured with the first priority and the measurement information indicating at least one measurement window to the UE. The UE may determine the priority of the first SPS PDSCH resource based on the first scheduling information and determine the measurement window based on the measurement information.

As illustrated in FIG. 3, when the window of the SPS PDSCH resource having the first priority is within the measurement window of the inter-frequency signal measurement performed by the UE, that is, the start time t1 of the SPS PDSCH resource is later than or equal to the start time of the measurement window t5 and the end time t2 of the SPS PDSCH resource is earlier than or equal to the end time t6 of the measurement window, the UE may stop the inter-frequency signal measurement on the SPS PDSCH resource having the first priority. The UE may perform the inter-frequency signal measurement on resources other than the SPS PDSCH resource. The base station can keep transmitting the downlink data within the window of the SPS PDSCH resource having the first priority, not avoiding the measurement window of the inter-frequency signal measurement.

In this way, with the method in accordance with embodiments of the disclosure, the UE can keep the downlink communication with the serving cell within the measurement window of the inter-frequency signal measurement, thereby reducing the situation that the downlink data transmission is stopped due to the inter-frequency signal measurement, reducing the transmission delay of the downlink data, and meeting the requirements of low-latency data transmission.

In some embodiments, the block 804 may include in response to determining that the time difference between the start time of the measurement window and the start time of one of the at least one first SPS PDSCH resource is less than or equal to the time length threshold, keeping the downlink communication with the UE during the time period between the start time of the measurement window and the start time of the one of the at least one first SPS PDSCH resource.

Here, the one of the at least one first SPS PDSCH resource may be any one of the at least one first SPS PDSCH resource within the measurement window, or may be the first one of the at least one first SPS PDSCH resource within the measurement window.

Since the receiver of the UE needs a certain handover time period for the handover between the carrier frequency of the serving cell and the carrier frequency of the inter-frequency cell, within is a time duration that the UE perform the carrier frequency handover once, when the time period between the start time of the measurement window and the start time of the first SPS PDSCH resource is less than the twice of the handover time period, the UE cannot return back to the carrier frequency of the serving cell during this time period, and thus the UE cannot complete the handover process. This results in useless handover operations and even delays in the downlink data transmission on the first SPS PDSCH resource. Therefore, in order to avoid the above situation, the base station may configure the time length threshold based on at least the handover time period. The time length threshold may be greater than or equal to the twice of the handover time period. In some examples, the base station can configure the time length threshold based on factors other than the carrier frequency handover time period of the UE. The other factors include, for example, resource configuration status of the system, global configuration of the base station, channel quality, and the like. Here, keeping the downlink communication with the serving cell may include that the receiver of the UE does not monitor the signal of the inter-frequency cell.

As illustrated in FIG. 4, the SPS PDSCH resource having the first priority is within the measurement window during which the UE performs the inter-frequency signal measurement and the time difference from the start time t5 of the measurement window to the start time t1 of the SPS PDSCH resource is less than or equal to the time length threshold. In the case that the inter-frequency signal measurement is performed between t5 and t1, since the UE needs to perform the carrier frequency handover twice, considering the time required for the inter-frequency signal measurement and the inter-frequency handover time period of the UE, it may be determined that the UE cannot switch to the carrier frequency of the serving cell for the downlink communication from the start time t5. Therefore, when the time difference between the start time t5 of the measurement window to the start time t1 of the SPS PDSCH resource is less than or equal to the time length threshold, the UE will keep receiving the downlink information in the serving cell during the time period from t5 to t1, without performing the inter-frequency signal measurement, and the UE can perform the inter-frequency signal measurement after the end time t2 of the transmission window.

In this way, happening of the case that the UE cannot switch to the carrier frequency of the serving cell timely from the start time of the SPS PDSCH resource caused by performing the handover between the carrier frequency of the inter-frequency cell and the carrier frequency of the serving cell before the first SPS PDSCH resource can be reduced. Therefore, the reliability of the downlink data reception during the transmission window can be improved and invalid carrier frequency handover can be reduced.

In some embodiments, which are not within the scope of the invention, and are provided for illustrative purposes, the block 804 may include in response to determining that the time difference between the end time of the measurement window and the end time of one of the at least one first SPS PDSCH resource is less than or equal to the time length threshold, keeping the downlink communication with the UE during the time period between the end time of the one of the at least one first SPS PDSCH resource and the end time of the measurement window.

Here, the one of the at least one first SPS PDSCH resource may be any one or the last one of the at least one first SPS PDSCH resource within the measurement window.

In the case that the time period between the end time of the measurement window and the end time of the SPS PDSCH resource is less than or equal to the time length threshold, since the UE needs to perform the carrier frequency handover twice, after performing inter-frequency signal measurement within this time period, it is determined that there is no enough time for the UE to switch to the carrier frequency of the serving cell at the end of the measurement window. Therefore, the UE can keep receiving the downlink information in the serving cell during this window, without performing inter-frequency signal measurement.

As illustrated in FIG. 5, the SPS PDSCH resource is within the measurement window during which the UE performs the inter-frequency signal measurement and the time period from the end time t2 of the SPS PDSCH resource to the end time t6 of the measurement window is less than or equal to the time length threshold. If the inter-frequency signal measurement is performed from t2 to t6, since the UE needs to perform the carrier frequency handover twice, considering the time period occupied by the inter-frequency signal measurement and the inter-frequency handover time period of the UE, it can be determined that the UE cannot switch to the carrier frequency of the serving cell at t6. Therefore, when the time period from the end time t2 of the SPS PDSCH resource to the end time t6 of the measurement window is less than or equal to the inter-frequency handover time period of the UE, the UE can keep receiving the downlink information in the serving cell from t2 to t6, and does not perform the inter-frequency signal measurement.

In this way, the happening of the case that the UE cannot switch to the carrier frequency of the serving cell timely for the downlink communication after the end of the measurement window caused by performing the inter-frequency signal measurement and the downlink communication handover from the end time of the measurement window to the end time of the SPS PDSCH resource. In addition, the invalid carrier frequency handover can be reduced.

In the embodiments, which are within the scope of the invention, the block 804 includes, in response to determining that a time period between two adjacent first SPS PDSCH resources of at least two first SPS PDSCH resources within the measurement window is less than or equal to the time length threshold, keeping the downlink communication with the UE during the time period.

There may be two or more SPS PDSCH resources within one measurement window. During the time period between two adjacent SPS PDSCH resources, if it needs to perform the inter-frequency signal measurement, the UE needs to switch from the carrier frequency of the serving cell to the carrier frequency of the inter-frequency cell, performs the inter-frequency signal measurement, and switches from the carrier frequency of the inter-frequency cell to the carrier frequency of the serving cell for the downlink communication. Therefore, the UE requires a certain handover time period. The UE or the base station may set the time length threshold to be greater than or equal to the handover time period. If the time period left for the UE to perform the carrier frequency handover twice is less than or equal to the time length threshold, it is determined that the UE cannot complete the carrier frequency handover twice when the time period ends. Therefore, if the time period between two SPS PDSCH resources is less than or equal to the time length threshold, the UE keeps the downlink communication with the serving cell, i.e., not performing the inter-frequency signal measurement.

As illustrated in FIG. 6, multiple SPS PDSCH resources are within the measurement window during which the UE performs the inter-frequency signal measurement. In the two adjacent SPS PDSCH resources, the time period from the end time t2 of the earlier SPS PDSCH resource to the start time t3 of the later SPS PDSCH resource is less than or equal to the time length threshold. If the inter-frequency signal measurement is performed between t2 and t3, considering the time period occupied by the inter-frequency signal measurement and the time period of performing the carrier frequency handover twice by the UE, it can be determined that the UE cannot switch to the carrier frequency of the serving cell for the downlink communication at t3. Therefore, the UE can keep receiving downlink information in the serving cell during the time period from t2 to t3, without performing the inter-frequency signal measurement.

In this way, the happening of the case that the UE cannot switch to the carrier frequency of the serving cell in time after the time period between the two adjacent SPS PDSCH ends caused by performing the handover between the carrier frequency of the inter-infrequency cell and the carrier frequency of the serving cell during the time period between the two adjacent SPS PDSCH resources. At the same time, invalid carrier frequency handover can be reduced.

As illustrated in FIG. 7, there are two SPS PDSCH resources within the measurement window during which the UE performs the inter-frequency signal measurement.

In FIG. 7, X represents the time period from the start time of a first one of the transmission windows occupied by the two SPS PDSCH resources to the start time of the measurement window. In the case that X is less than or equal to the time length threshold, the inter-frequency signal measurement is performed after the first transmission window. That is, the UE keeps the downlink communication with the serving cell within the time period X, without performing the inter-frequency signal measurement.

In FIG. 7, Y represents the time period from the end time of the first one of the two SPS PDSCH resources to the start time of the second one of the two SPS PDSCH resources. In the case that Y is less than or equal to the time length threshold, the UE keeps the downlink communication with the serving cell during the time period Y, without performing the inter-frequency signal measurement.

In FIG. 7, Z represents the time period from the end time of the second one of the two SPS PDSCH resources to the end time of the measurement window. In the case that Z is less than or equal to the time length threshold, the inter-frequency signal measurement is not performed after the second SPS PDSCH resource. That is, the UE keeps the downlink communication with the serving cell during the time period Z, without performing the inter-frequency signal measurement.

In some embodiments, the time length threshold is greater than or equal to the time period that the UE performs the inter-frequency handovers twice.

In the process that the UE switches from the downlink signal received by the serving cell to the carrier frequency of the inter-frequency cell for the inter-frequency signal measurement and then to the downlink signal received by the serving cell, the receiver needs to switch from the carrier frequency of the serving cell to the carrier frequency of the inter-frequency cell, and the UE needs to configure the receiver. The time length threshold may be greater than or equal to the twice of the inter-frequency handover time period of the UE.

During the time period between two adjacent transmission windows, the UE needs to switch from the carrier frequency of the serving cell to the carrier frequency of the inter-frequency cell, performs the inter-frequency signal measurement, and switches from the carrier frequency of the inter-frequency cell to the carrier frequency of the serving cell. Therefore, the UE needs the twice of the inter-frequency handover time period. The time length threshold may be greater than or equal to the twice of the inter-frequency handover time period of the UE.

The time length threshold is greater than or equal to the time period that the UE performs the inter-frequency handover twice. It can be determined that the UE can complete the carrier frequency handover twice.

In this way, the time length threshold is used as the condition for determining whether to perform the handover between the carrier frequency of the inter-frequency cell and the carrier frequency of the serving cell, it may be accurately determined whether there is enough time for the UE to perform the carrier frequency handover between the inter-frequency cell and the serving cell. Therefore, invalid carrier frequency handover can be reduced and it can be ensured that the UE can switch to the carrier frequency of the serving cell for the data transmission within the transmission window or the UE can switch to the carrier frequency of the inter-frequency cell to perform the inter-frequency signal measurement within the measurement window.

In some embodiments, the data transmission method may further include receiving the capability information of the UE, determining the time length threshold based on the capability information, and sending indication information configured to indicate the time length threshold.

Here, the time length threshold may be determined by the base station and sent to the UE through the indication information.

The UE can send the capability information, such as the time period required for performing the carrier frequency handover by the UE, to the base station. The base station may determine the inter-frequency handover time period based on the reported capability information, and send the determined time length threshold to the UE. The base station can separately assign the time length threshold for a UE or assign the determined time length threshold to multiple UEs.

In some embodiments, the inter-frequency signal measurement includes reference signal measurement performed by the UE on the inter-frequency cell, and/or SSB monitoring performed by the UE on the inter-frequency cell.

The measurement window during which the UE performs the inter-frequency signal measurement on the inter-frequency cell includes the measurement gap during which the UE performs the reference signal measurement on the inter-frequency cell and/or the duration window during which the UE performs the SSB monitoring on the inter-frequency cell.

Here, the reference signal measurement may be that the UE measures the reference signal of the inter-frequency cell when performing mobility measurement. The UE may measure the reference signal of the inter-frequency cell at intervals. The base station may configure the periodic measurement gap for the UE. The UE may stop measuring the reference signal when performing the downlink SPS data transmission having the first priority.

The base station may configure the periodic duration window for the UE to monitor the SSB of the inter-frequency cell. The UE can stop monitoring the SSB of the inter-frequency cell when performing the downlink SPS data transmission having the first priority.

In some embodiments, the first SPS PDSCH resource having the first priority includes the high-priority SPS PDSCH resource configured through the RRC signaling.

Here, the base station can configure the SPS PDSCH resource to have the first priority through the RRC signaling. Here, the first priority may be the highest priority, or the first priority may be a priority higher than a preset priority threshold.

For example, the URLLC service has high requirements on the low latency. Therefore, the SPS PDSCH resource used for the downlink data transmission of the URLLC service may be determined to have the first priority. The base station may send the downlink SPS PDSCH resource configuration information and the priority information corresponding to the downlink SPS PDSCH configuration to the UE through the RRC signaling. When the transmission window occupied by the SPS PDSCH resource having the first priority is within the measurement window, the downlink data transmission of the downlink SPS PDSCH having the first priority is performed. In this way, the time latency of the downlink data of the URLLC service can be reduced, and the latency requirements of the downlink data transmission of the URLLC service is satisfied.

In some embodiments, the method further includes determining second scheduling information associated with a second SPS PDSCH resource, in which the second scheduling information is configured to indicate a second SPS PDSCH resource configured with a second priority and the first priority is higher than the second priority, determining, based on the measurement information and the second scheduling information, that the second SPS PDSCH resource overlaps the measurement window in the time domain; and in response to determining that the second SPS PDSCH resource overlaps the measurement window in the time domain, stopping the downlink communication with the UE on an overlapping portion where the second SPS PDSCH resource overlaps the measurement window in the time domain.

In some embodiments, keeping the inter-frequency signal measurement on the overlapping portion where the second SPS PDSCH resource overlaps the measurement window in the time domain includes stopping the downlink communication with the serving cell on the overlapped portion where the second SPS PDSCH resource overlaps the measurement window in the time domain.

The base station may stop the downlink communication with the UE on the overlapping portion where the second SPS PDSCH resource overlaps the measurement window in the time domain.

The UE may not use the second SPS PDSCH resource to perform the downlink communication with the serving cell when performing the inter-frequency signal measurement within the measurement window.

In this way, the completion of the inter-frequency signal measurement can be within the measurement window can be ensured, and at the same time, the flexible configuration for the high-priority SPS PDSCH resource and the low-priority SPS PDSCH resource in the inter-frequency signal measurement scenario is achieved.

In some embodiments, the first SPS PDSCH resource is scheduled for a first communication service type. The first communication service type has a higher priority than a second communication service type.

For example, the priority of the URLLC service type is higher than the priority of the mMTC type, such that the first SPS PDSCH resource may be scheduled for the URLLC service type.

In this way, the service data with the higher priority can be not affected by the inter-frequency signal measurement, to reduce the time latency.

A specific example is provided below in conjunction with any of the above-mentioned embodiments.

This example is related to a method for transmitting data within the measurement gap/SSB measurement time configuration duration (SMTC duration) window.

When the priority parameter of the downlink SPS PDSCH resource is configured as a high priority, within the measurement gap, if there is a transmission opportunity of the SPS PDSCH resource, the UE needs to interrupt the inter-frequency signal measurement and return to the carrier frequency of the serving cell to receive the downlink data transmitted by the SPS PDSCH resource, and perform the inter-frequency signal measurement after the reception of the downlink data is completed.

Considering that the receiver of the UE needs handover time period to perform the handover between the carrier frequency of the serving cell and the carrier frequency of the inter-frequency cell, the following solutions are also available.
1. When the time interval between the start time of the measurement gap and the start time of the transmission window occupied by the first one of the SPS PDSCH resources within the measurement gap is equal to or less than 2T, the UE performs the inter-frequency signal measurement after the transmission window occupied by the first one of the SPS PDSCH resources ends.
2. When the time interval between the end time of transmission window occupied by the last one of the SPS PDSCH resources within the measurement gap and the end time of the measurement gap is equal to or less than 2T, the UE will not perform the inter-frequency signal measurement after the transmission window occupied by the last one of the SPS PDSCH resources, but keeps receiving the downlink information of the serving cell.
3. When there are multiple transmission windows occupied by the SPS PDSCH resources within the measurement gap and the time interval between the transmission windows occupied by the two adjacent SPS PDSCH resources is equal to or less than 2T, the UE keeps the downlink communication with the serving cell and not perform the inter-frequency signal measurement between the transmission windows occupied by the two adjacent SPS PDSCH resources.

The above T is the handover time period required for performing the handover between the carrier frequencies by the receiver of the UE. The value of T is related to the capacity of the UE. The base station may configure the value of T for the UE after the UE reports the capability information of the UE. For example, the value of T can be configured as 0.5 ms.

Since the transmission window occupied by the SPS PDSCH resource and the measurement window are configured in advance by the base station using the RRC signaling, both the base station and the UE can predict the time relationship between the transmission window and the measurement window in advance.

As illustrated in FIG. 7. The UE configures the high-priority SPS PDSCH resource. In FIG. 7, if x is equal to or less than 2T, the UE will not perform the inter-frequency signal measurement after the measurement gap configured by the base station starts, and keep the downlink communication with the serving cell. That is, within the time period corresponding to x, the UE will not perform the inter-frequency signal measurement.

If y is greater than 2T, within the time period corresponding to y, the UE will perform the inter-frequency signal measurement.

If z is greater than 2T, the inter-frequency signal measurement will be performed again after the transmission window 2. That is, within the time period corresponding to z, the UE will perform the inter-frequency signal measurement.

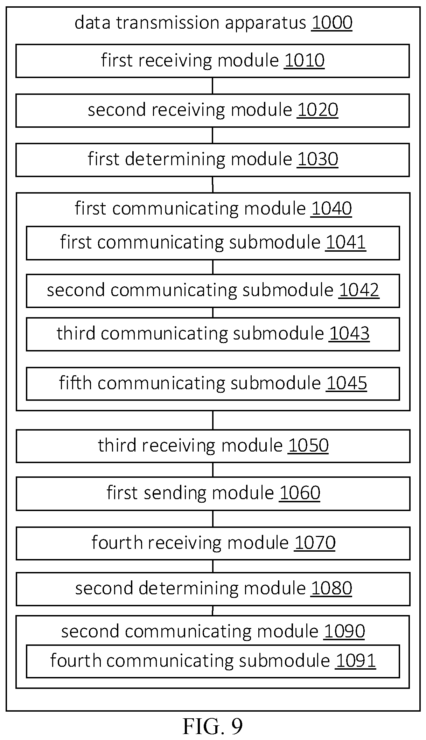

Embodiments of the disclosure further provides a data transmission apparatus, which is integrated into a UE of a wireless communication which are not within the scope of the invention, and are provided for illustrative purposes. FIG. 9 is a schematic diagram illustrating a data transmission apparatus 1000 in accordance with an embodiment of the disclosure. As illustrated in FIG. 9, the apparatus 1000 includes a first receiving module 1010, a second receiving module 1020, a first determining module 1030 and a first communicating module 1040.

The first receiving module 1010 is configured to receive measurement information associated with inter-frequency signal measurement. The measurement information is configured to indicate at least one measurement window.

The second receiving module 1020 is configured to receive first scheduling information associated with a first semi-persistent scheduling (SPS) physical downlink shared channel (PDSCH) resource. The first scheduling information is configured to indicate the first SPS PDSCH resource configured with a first priority.

The first determining module 1030 is configured to determine, based on the measurement window and the first scheduling information, whether the first SPS PDSCH resource overlaps the measurement window in the time domain.

The first communicating module 1040 is configured to, in response to determining that the first SPS PDSCH resource overlaps the measurement window in the time domain, keep a downlink communication with the serving cell at least during a window of the first SPS PDSCH resource.

In some embodiments, the inter-frequency signal measurement includes reference signal measurement performed by the UE on an inter-frequency cell, and/or the synchronization signal block (SSB) monitoring performed by the UE on the inter-frequency cell.

In some embodiments, the first communicating module 1040 includes a first communicating submodule 1041.

The first communicating submodule 1041 is configured to determine that a time difference between a start time of the measurement window and a start time of one of the at least one first SPS PDSCH resource is less than or equal to a time length threshold; keep the downlink communication with the serving cell during the time period between the start time of the measurement window and the start time of one of the at least one first SPS PDSCH resource; and performing the inter-frequency signal measurement after the window of the one of the at least one first SPS PDSCH resource ends.

In some embodiments, the first communicating module 1040 includes a second communicating submodule 1042.

The second communicating submodule 1042 is configured to determine that a time difference between an end time of one of the at least one first SPS PDSCH resource and an end time of the measurement window is less than or equal to the time length threshold; and keep the downlink communication with the serving cell within the time period between the end time of one of the at least one first SPS PDSCH resource and the end time of the measurement window.

In some embodiments, the first communicating module 1040 includes a third communicating submodule 1043.

The third communicating submodule 1043 is configured to determine that a time interval between two adjacent first SPS PDSCH resources in at least two first SPS PDSCH resources within the measurement window is less than or equal to the time length threshold; and keep the downlink communication on the serving cell during the time interval.

In some embodiments, the time length threshold is greater than or equal to a time period of performing the inter-frequency handover twice by the UE.

In some embodiments, the apparatus 1000 further includes a third receiving module 1050.

The third receiving module 1050 is configured to receive indication information configured to indicate the time length threshold.

In some embodiments, the apparatus 1000 further includes a first sending module 1060.

The first sending module 1060 is configured to report capability information of the UE. The capability information is used for the base station to determine the time length threshold.

In some embodiments, the apparatus 1000 further includes a fourth receiving module 1070, a second determining module 1080, and a second communicating module 1090.

The fourth receiving module 1070 is configured to receive second scheduling information associated with a second SPS PDSCH resource. The second scheduling information is configured to indicate a second SPS PDSCH resource configured with a second priority. The first priority is higher than the second priority.

The second determining module 1080 is configured to determine, based on the measurement information and the second scheduling information, that the second SPS PDSCH resource overlaps the measurement window in the time domain.

The second communicating module 1090 is configured to, in response to determining that the second SPS PDSCH resource overlaps the measurement window in the time domain, keep the inter-frequency signal measurement on an overlapping portion where the second SPS PDSCH resource overlaps the measurement window in the time domain.

In some embodiments, the second communicating module 1090 includes the fourth communicating module 1091.

The fourth communicating submodule 1091 is configured to stop the downlink communication with the serving cell on the overlapping portion where the second SPS PDSCH resource overlaps the measurement window in the time domain.

In some embodiments, the first SPS PDSCH resource is scheduled for a first communication service type. The first communication service type having a higher priority than the second communication service type.

In some embodiments, the first SPS PDSCH resource is configured to have the first priority through the RRC signaling.

In some embodiments, the first communicating module 1040 includes a fifth communicating submodule 1045.

The fifth communicating submodule 1045 is configured to at least stop the inter-frequency signal measurement on the overlapping portion where the first SPS PDSCH resource overlaps the measurement window in the time domain.

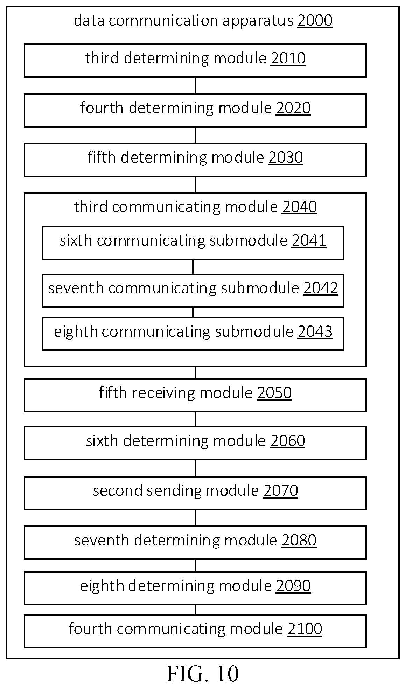

Embodiments of the disclosure further provides a data transmission apparatus, which is integrated in a base station of a wireless communication which are not within the scope of the invention, and are provided for illustrative purposes. FIG. 10 is a schematic diagram illustrating a data transmission apparatus 2000 in accordance with an embodiment of the disclosure. As illustrated in FIG. 10, the apparatus 2000 includes a third determining module 2010, a fourth determining module 2020, a fifth determining module 2030 and a third communicating module 2040.

The third determining module 2010 is configured to determine measurement information associated with inter-frequency signal measurement. The measurement information is configured to indicate at least one measurement window.

The fourth determining module 2020 is configured to determine first scheduling information associated with a first semi-persistent scheduling (SPS) physical downlink shared channel (PDSCH) resource. The first scheduling information is configured to indicate the first SPS PDSCH resource configured with a first priority.

The fifth determining module 2030 is configured to determine, based on the measurement window and the first scheduling information, that the first SPS PDSCH resource overlaps the measurement window in the time domain.

The third communicating module 2040 is configured to, in response to determining that the first SPS PDSCH resource overlaps the measurement window in the time domain, keep downlink communication with the UE at least during a window of the first SPS PDSCH resource.

In some embodiments, the third communicating module 2040 includes a sixth communicating submodule 2041.

The sixth communicating submodule 2041 is configured to determine that a time difference between a start time of the measurement window and a start time of one of the at least one first SPS PDSCH resource is less than or equal to a time length threshold; and keep the downlink communication with the UE during a time period between the start time of the measurement window and the start time of the one of the at least one first SPS PDSCH.

In some embodiments, the third communicating module 2040 includes a seventh communicating submodule 2042.

The seventh communicating submodule 2042 is configured to determine that a time difference between an end time of the measurement window and an end time of one of at least one first SPS PDSCH resource is less than or equal to the time length threshold; and keep the downlink communication with the UE during the time period between the end time of the measurement window and the end time of the one of the at least one first SPS PDSCH resource.

In some embodiments, the third communicating module 2040 includes an eighth communicating submodule 2043.

The eighth communicating submodule 2043 is configured to determine that a time interval between the two adjacent first SPS PDSCH resources of at least two first SPS PDSCH resources within the measurement window is less than or equal to the time length threshold; and keep the downlink communication with the UE during the time interval.

In some embodiments, the time length threshold is greater than or equal to a time period of performing the inter-frequency handover twice by the UE.

In some embodiments, the apparatus 2000 further includes a fifth receiving module 2050, a sixth determining module 2060, and a second sending module 2070.

The fifth receiving module 2050 is configured to receive capability information of the UE.

The sixth determining module 2060 is configured to determine the time length threshold based on the capability information.

The second sending module 2070 is configured to send indication information configured to indicate the time length threshold.

In some embodiments, the inter-frequency signal measurement includes reference signal measurement performed by UE on an inter-frequency cell, and/or synchronization signal block (SSB) monitoring performed by the UE on the inter-frequency cell.

In some embodiments, the first SPS PDSCH resource having the first priority includes a high-priority SPS PDSCH resource configured through a radio resource control (RRC) signaling.

In some embodiments, the apparatus 2000 further includes a seventh determining module 2080, an eighth determining module 2090, and a fourth communicating module 2100.

The seventh determining module 2080 is configured to determine second scheduling information associated with a second SPS PDSCH resource. The second scheduling information is configured to indicate the second SPS PDSCH resource configured with a second priority. The first priority is higher than the second priority.

The eighth determining module 2090 is configured to determine, based on the measurement information and the second scheduling information, that the second SPS PDSCH resource overlaps the measurement window in the time domain.

The fourth communicating module 2100 is configured to, in response to determining that the second SPS PDSCH resource overlaps the measurement window in the time domain, stop the downlink communication with the UE on an overlapping portion where the second SPS PDSCH resource overlaps the measurement window in the time domain.

In some embodiments, the first SPS PDSCH resource is scheduled for a first communication service type. The first communication service type has a higher priority than a second communication service type.

In some embodiments, the first receiving module 1010, the second receiving module 1020, the first determining module 1030, the first communicating module 1040, the third receiving module 1050, the fourth receiving module 1070, the first sending module 1060, the fifth receiving module 2050, the second determining module 1080, the second communicating module 1090, the third determining module 2010, the fourth determining module 2020, the fifth determining module 2030, the third communicating module 2040, the fifth receiving module 2050, the sixth determining module 2060, the second sending module 2070, the seventh determining module 2080, the eighth determining module 2090, and the fourth communicating module 2100 can be implemented as one or more central processing units (CPU), graphics processing unit (GPU), baseband processor (BP), Application Specific Integrated Circuit (ASIC), DSP, Programmable Logic Device (PLD), Complex Programmable Logic Device (CPLD), Field-Programmable Gate Array (FPGA), general-purpose processor, controller, Micro Controller Unit (MCU), Microprocessor, or other electronic components for performing the aforementioned method.

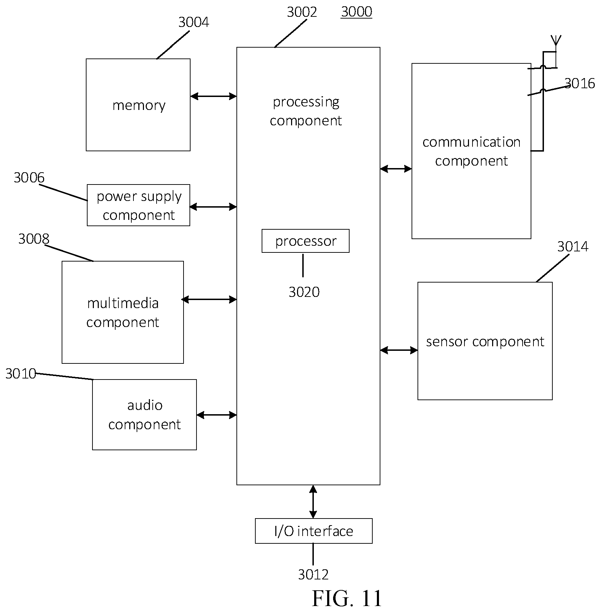

FIG. 11 is a block diagram illustrating a data transmission apparatus 3000 in accordance with an embodiment of the disclosure. For example, the apparatus 3000 may be a mobile phone, a computer, a digital broadcast terminal, a messaging device, a game console, a tablet device, a medical device, a fitness device, a personal digital assistant, and the like.

As illustrated in FIG. 11, the apparatus 3000 may include one or more of the following components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the overall operation of the apparatus 3000, such as operations associated with display, phone calls, data communications, camera operations, and recording operations. The processing component 3002 can include one or more processors 3020 to execute instructions to perform all or some of the steps of the methods described above. Additionally, the processing component 3002 may include one or more modules that facilitate the interaction between processing component 3002 and other components. For example, the processing component 3002 may include a multimedia module to facilitate the interaction between the multimedia component 3008 and the processing component 3002.

The memory 3004 is configured to store various types of data to support operations of the apparatus 3000. Examples of such data include instructions for operating any application or method on the apparatus 3000, contact data, phonebook data, messages, pictures, videos, and the like. The memory 3004 may be implemented by any type of volatile or non-volatile storage device or a combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power supply component 3006 provides power to various components of the apparatus 3000. The power supply components 3006 may include a power management system, one or more power supplies, and other components associated with generating, managing, and distributing power to the apparatus 3000.

The multimedia component 3008 includes a screen that provides an output interface between the apparatus 3000 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor can sense not only the boundaries of a touch or swipe action, but also the duration and pressure associated with the touch or swipe action. In some embodiments, the multimedia component 3008 includes a front-facing camera and/or a rear-facing camera. When the apparatus 3000 is in an operation mode, such as a shooting mode or a video mode, the front-facing camera and/or the rear-facing camera may receive external multimedia data. Each of the front-facing and rear-facing cameras can be a fixed optical lens system or have focal length and optical zoom capability.

The audio component 3010 is configured to output and/or input audio signals. For example, the audio component 3010 includes a microphone (MIC) that is configured to receive external audio signals when the apparatus 3000 is in operating modes, such as call mode, recording mode, and voice recognition mode. The microphone is configured to receive external audio signals. The received audio signal may be further stored in the memory 3004 or transmitted via the communication component 3016. In some embodiments, the audio component 3010 also includes a speaker for outputting the audio signals.

The I/O interface 3012 is configured to provide an interface between the processing component 3002 and a peripheral interface module. The peripheral interface module may be a keyboard, a click wheel, a button, and the like. These buttons may include, but are not limited to, home button, volume buttons, start button, and lock button.

The sensor component 3014 includes one or more sensors for providing status assessment of various aspects of the apparatus 3000. For example, the sensor component 3014 can detect the on/off state of the apparatus 3000, the relative positioning of components, such as the display and keypad of the apparatus 3000. The sensor component 3014 can also detect a change in the position of the apparatus 3000 or a component of the apparatus 3000, the presence or absence of contact with the apparatus 3000, the orientation or acceleration/deceleration of the apparatus 3000 and the temperature change of the apparatus 3000. The sensor component 3014 may include a proximity sensor configured to detect the presence of nearby objects in the absence of any physical contact. The sensor component 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate wired or wireless communication between the apparatus 3000 and other devices. The apparatus 3000 may access a wireless network based on a communication standard, such as Wi-Fi, 2G or 3G, or a combination thereof. In some examples, the communication component 3016 receives broadcast signals or broadcast related information from an external broadcast management system via a broadcast channel. In some examples, the communication component 3016 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In some examples, the apparatus 3000 may be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic component implementation for performing the above method.

In some embodiments, there is also provided a non-transitory computer-readable storage medium including instructions, such as a memory 3004 including instructions, which are executable by the processor 3020 of the apparatus 3000 to perform the above method. For example, the non-transitory computer-readable storage medium may be ROM, random access memory (RAM), CD-ROM, magnetic tape, floppy disk, optical data storage device, and the like.

Other implementations of the disclosure will be readily got by those skilled in the art upon consideration of the specification and practice of the disclosure. This disclosure is intended to cover any variations, uses, or adaptations of embodiments that fall within the scope of the invention as defined by the claims.

It is understandable that the embodiments of the disclosure are not limited to the precise structures described above and illustrated in the accompanying drawings and that various modifications and changes may be made without departing from the scope of the invention as defined by the claims.

## Claims

1. A data transmission method performed by a user equipment, UE, the method comprising:
receiving (201) measurement information associated with an inter-frequency signal measurement, wherein the measurement information indicates at least one measurement window;
receiving (202) first scheduling information associated with a first semi-persistent scheduling,SPS, physical downlink shared channel, PDSCH, resource, wherein the first scheduling information indicates the first SPS PDSCH resource configured with a first priority;
determining (203) that the first SPS PDSCH resource overlaps the measurement window in time domain based on the measurement information and the first scheduling information; and
keeping (204) downlink communication with a serving cell at least on a window of the first SPS PDSCH resource in response to determining that the first SPS PDSCH resource overlaps the measurement window in the time domain; the method
**characterized in that**, keeping (204) the downlink communication with the serving cell at least on the window of the first SPS PDSCH resource comprises: determining that a time interval between two adjacent first SPS PDSCH resources of at least two first SPS PDSCH resources within the measurement window is less than or equal to a time length threshold; and keeping the downlink communication with the serving cell within the time interval based on this determination.

2. The method of claim 1, wherein the inter-frequency signal measurement comprises:
reference signal measurement performed by the UE, on an inter-frequency cell; and/or
synchronized signal block, SSB, monitoring performed by the UE on the inter-frequency cell.

3. The method of claim 1 or 2, further comprising:
receiving second scheduling information associated with a second SPS PDSCH resource, wherein the second scheduling information indicates the second SPS PDSCH resource configured with a second priority, and the first priority is higher than the second priority;
determining that the second SPS PDSCH resource overlaps the measurement window in the time domain based on the measurement information and the second scheduling information; and
in response to determining that the second SPS PDSCH resource overlaps the measurement window in the time domain, keeping the inter-frequency signal measurement on an overlapping portion where the second SPS PDSCH resource overlaps the measurement window in the time domain.

4. The method of claim 3, wherein keeping the inter-frequency signal measurement on the overlapping portion where the second SPS PDSCH resource overlaps the measurement window in the time domain comprises:
stopping the downlink communication with the serving cell on the overlapping portion where the second SPS PDSCH resource overlaps the measurement window in the time domain.

5. The method of claim 1 or 2, wherein the first SPS PDSCH resource is scheduled for a first communication service type, wherein the first communication service type has a higher priority than a second communication device type.

6. The method of claim 1 or 2, wherein the first SPS PDSCH resource is configured to have the first priority through a radio resource control, RRC, signaling.

7. The method of claim 1 or 2, wherein keeping the downlink communication with the serving cell on the first SPS PDSCH resource comprises:
at least stopping the inter-frequency signal measurement on an overlapping portion where the first SPS PDSCH resource overlaps the measurement window in the time domain.

8. A data communication method, performed by a base station, BS, the method comprising:
determining (801) measurement information associated with inter-frequency signal measurement, wherein the measurement information indicates at least one measurement window;
determining (802) first scheduling information associated with a first semi-persistent scheduling, SPS, physical downlink shared channel, PDSCH, resource, wherein the first scheduling information indicates the first SPS PDSCH resource configured with a first priority;
determining (803) that the first SPS PDSCH resource overlaps the measurement window in time domain based on the measurement information and the first scheduling information; and
keeping (804) downlink communication with a user equipment, UE, at least on a window of the first SPS PDSCH resource in response to determining that the first SPS PDSCH resource overlaps the measurement window in the time domain; the method
**characterized in that**, keeping (804) the downlink communication with the UE at least on the window of the first SPS PDSCH resource comprises: determining that a time interval between two adjacent first SPS PDSCH resources of at least two first SPS PDSCH resources within the measurement window is less than or equal to a time length threshold; and keeping the downlink communication with the UE within the time interval based on this determination.

9. The method of claim 8, wherein the inter-frequency signal measurement comprises:
reference signal measurement performed by the UE on an inter-frequency cell; and/or
synchronized signal block, SSB, monitoring performed by the UE on the inter-frequency cell.

10. The method of claim 8 or 9, wherein the first SPS PDSCH resource having the first priority comprises a high-priority SPS PDSCH resource configured through a radio resource control, RRC, signaling.

11. The method of claim 8 or 9, further comprising:
determining second scheduling information associated with a second SPS PDSCH resource, wherein the second scheduling information is configured indicate the second SPS PDSCH resource configured with a second priority, and the first priority is higher than the second priority;
determining that the second SPS PDSCH resource overlaps the measurement window in time domain based on the measurement information and the second scheduling information; and
in response to determining that the second SPS PDSCH resource overlaps the measurement window in the time domain, stopping the downlink communication with the UE on an overlapping portion where the second SPS PDSCH resource overlaps the measurement window in the time domain.

12. A communication device, which is a user equipment, UE, or a base station, BS, respectively, the device comprising a processor (3020), a transceiver (3016), a memory (3004), and a program stored on the memory and executable by the processor, wherein when the processor runs the program, the processor is configured to perform the method of any one of claims 1 to 7 and 8 to 11.

13. A storage medium, having an executable program stored thereon, wherein when the executable program is performed by a processor of a user equipment, UE, or a base station, BS, respectively, the method of any one of claims 1 to 7 and 8 to 11 is performed by this processor.

## Patentansprüche

1. Verfahren zur Datenübertragung, das von einer Benutzervorrichtung, UE, durchgeführt wird, wobei das Verfahren umfasst:
Empfangen (201) von Messinformationen, die mit einer Inter-Frequenz-Signal-Messung assoziiert sind, wobei die Messinformationen mindestens ein Messfenster anzeigen;
Empfangen (202) von ersten Planungsinformationen, die mit einer ersten semi-persistenten Planungs-, SPS-, Physical Downlink Shared Channel-, PDSCH-, Ressource assoziiert sind, wobei die ersten Planungsinformationen die erste SPS-PDSCH-Ressource anzeigen, die mit einer ersten Priorität konfiguriert ist;
Bestimmen (203), dass die erste SPS-PDSCH-Ressource das Messfenster im Zeitbereich basierend auf den Messinformationen und den ersten Planungsinformationen überlappt; und
Aufrechterhalten (204) der Downlink-Kommunikation mit einer bedienenden Zelle mindestens auf einem Fenster der ersten SPS-PDSCH-Ressource als Reaktion auf das Bestimmen, dass die erste SPS-PDSCH-Ressource das Messfenster im Zeitbereich überlappt; wobei das Verfahren
**dadurch gekennzeichnet ist, dass** das Aufrechterhalten (204) der Downlink-Kommunikation mit der bedienenden Zelle mindestens auf dem Fenster der ersten SPS-PDSCH-Ressource umfasst: Bestimmen, dass ein Zeitintervall zwischen zwei benachbarten ersten SPS-PDSCH-Ressourcen von mindestens zwei ersten SPS-PDSCH-Ressourcen innerhalb des Messfensters kleiner oder gleich einem Zeitlängenschwellenwert ist; und Aufrechterhalten der Downlink-Kommunikation mit der bedienenden Zelle innerhalb des Zeitintervalls basierend auf dieser Bestimmung.

2. Verfahren nach Anspruch 1, wobei die Inter-Frequenz-Signal-Messung umfasst:
Referenzsignal-Messung, die von der UE auf einer Inter-Frequenz-Zelle durchgeführt wird; und/oder
Synchronisiertes Signalblock-, SSB-, Monitoring, das von der UE auf der Inter-Frequenz-Zelle durchgeführt wird.

3. Verfahren nach Anspruch 1 oder 2, ferner umfassend:
Empfangen von zweiten Planungsinformationen, die mit einer zweiten SPS-PDSCH-Ressource assoziiert sind, wobei die zweiten Planungsinformationen die zweite SPS-PDSCH-Ressource anzeigen, die mit einer zweiten Priorität konfiguriert ist, und die erste Priorität höher ist als die zweite Priorität;
Bestimmen, dass die zweite SPS-PDSCH-Ressource das Messfenster im Zeitbereich basierend auf den Messinformationen und den zweiten Planungsinformationen überlappt; und
als Reaktion auf das Bestimmen, dass die zweite SPS-PDSCH-Ressource das Messfenster im Zeitbereich überlappt, Aufrechterhalten der Inter-Frequenz-Signal-Messung auf einem überlappenden Abschnitt, wo die zweite SPS-PDSCH-Ressource das Messfenster im Zeitbereich überlappt.

4. Verfahren nach Anspruch 3, wobei das Aufrechterhalten der Inter-Frequenz-Signal-Messung auf dem überlappenden Abschnitt, wo die zweite SPS-PDSCH-Ressource das Messfenster im Zeitbereich überlappt, umfasst:
Stoppen der Downlink-Kommunikation mit der bedienenden Zelle auf dem überlappenden Abschnitt, wo die zweite SPS-PDSCH-Ressource das Messfenster im Zeitbereich überlappt.

5. Verfahren nach Anspruch 1 oder 2, wobei die erste SPS-PDSCH-Ressource für einen ersten Kommunikationstyp geplant ist, wobei der erste Kommunikationstyp eine höhere Priorität hat als ein zweiter Kommunikationstyp.

6. Verfahren nach Anspruch 1 oder 2, wobei die erste SPS-PDSCH-Ressource so konfiguriert ist, dass sie die erste Priorität durch eine Funkressourcensteuerungs-, RRC-, Signalisierung hat.

7. Verfahren nach Anspruch 1 oder 2, wobei das Aufrechterhalten der Downlink-Kommunikation mit der bedienenden Zelle auf der ersten SPS-PDSCH-Ressource umfasst:
Mindestens Stoppen der Inter-Frequenz-Signal-Messung auf einem überlappenden Abschnitt, wo die erste SPS-PDSCH-Ressource das Messfenster im Zeitbereich überlappt.

8. Verfahren zur Datenkommunikation, das von einer Basisstation, BS, durchgeführt wird, wobei das Verfahren umfasst:
Bestimmen (801) von Messinformationen, die mit einer Inter-Frequenz-Signal-Messung assoziiert sind, wobei die Messinformationen mindestens ein Messfenster anzeigen;
Bestimmen (802) von ersten Planungsinformationen, die mit einer ersten semi-persistenten Planungs-, SPS-, Physical Downlink Shared Channel-, PDSCH-, Ressource assoziiert sind, wobei die ersten Planungsinformationen die erste SPS-PDSCH-Ressource anzeigen, die mit einer ersten Priorität konfiguriert ist;
Bestimmen (803), dass die erste SPS-PDSCH-Ressource das Messfenster im Zeitbereich basierend auf den Messinformationen und den ersten Planungsinformationen überlappt; und
Aufrechterhalten (804) der Downlink-Kommunikation mit einer Benutzervorrichtung, UE, mindestens auf einem Fenster der ersten SPS-PDSCH-Ressource als Reaktion auf das Bestimmen, dass die erste SPS-PDSCH-Ressource das Messfenster im Zeitbereich überlappt; wobei das Verfahren
**dadurch gekennzeichnet ist, dass** das Aufrechterhalten (804) der Downlink-Kommunikation mit der UE mindestens auf dem Fenster der ersten SPS-PDSCH-Ressource umfasst: Bestimmen, dass ein Zeitintervall zwischen zwei benachbarten ersten SPS-PDSCH-Ressourcen von mindestens zwei ersten SPS-PDSCH-Ressourcen innerhalb des Messfensters kleiner oder gleich einem Zeitlängenschwellenwert ist; und Aufrechterhalten der Downlink-Kommunikation mit der UE innerhalb des Zeitintervalls basierend auf dieser Bestimmung.

9. Verfahren nach Anspruch 8, wobei die Inter-Frequenz-Signal-Messung umfasst:
Referenzsignal-Messung, die von der UE auf einer Inter-Frequenz-Zelle durchgeführt wird; und/oder
Synchronisiertes Signalblock-, SSB-, Monitoring, das von der UE auf der Inter-Frequenz-Zelle durchgeführt wird.

10. Verfahren nach Anspruch 8 oder 9, wobei die erste SPS-PDSCH-Ressource mit der ersten Priorität eine hochpriorisierte SPS-PDSCH-Ressource umfasst, die durch eine Funkressourcensteuerungs-, RRC-, Signalisierung konfiguriert ist.

11. Verfahren nach Anspruch 8 oder 9, ferner umfassend:
Bestimmen von zweiten Planungsinformationen, die mit einer zweiten SPS-PDSCH-Ressource assoziiert sind, wobei die zweiten Planungsinformationen konfiguriert sind, um die zweite SPS-PDSCH-Ressource anzuzeigen, die mit einer zweiten Priorität konfiguriert ist, und die erste Priorität höher ist als die zweite Priorität;
Bestimmen, dass die zweite SPS-PDSCH-Ressource das Messfenster im Zeitbereich basierend auf den Messinformationen und den zweiten Planungsinformationen überlappt; und
als Reaktion auf das Bestimmen, dass die zweite SPS-PDSCH-Ressource das Messfenster im Zeitbereich überlappt, Stoppen der Downlink-Kommunikation mit der UE auf einem überlappenden Abschnitt, wo die zweite SPS-PDSCH-Ressource das Messfenster im Zeitbereich überlappt.

12. Vorrichtung zur Kommunikation, die eine Benutzervorrichtung, UE, oder eine Basisstation, BS, ist, wobei die Vorrichtung einen Prozessor (3020), einen Transceiver (3016), einen Speicher (3004) und ein Programm umfasst, das auf dem Speicher gespeichert ist und durch den Prozessor ausführbar ist, wobei, wenn der Prozessor das Programm ausführt, der Prozessor konfiguriert ist, um das Verfahren nach einem der Ansprüche 1 bis 7 bzw. 8 bis 11 durchzuführen.

13. Speichermedium, auf dem ein ausführbares Programm gespeichert ist, wobei, wenn das ausführbare Programm durch einen Prozessor einer Benutzervorrichtung, UE, oder einer Basisstation, BS, ausgeführt wird, das Verfahren nach einem der Ansprüche 1 bis 7 bzw. 8 bis 11 durch diesen Prozessor durchgeführt wird.

## Revendications

1. Procédé de transmission de données effectué par un équipement utilisateur, UE, le procédé comprenant :
la réception (201) d'informations de mesure associées à une mesure de signal inter-fréquence, les informations de mesure indiquant au moins une fenêtre de mesure ;
la réception (202) de premières informations de planification associées à une première ressource de canal partagé de liaison descendante physique à planification semi-persistante, SPS PDSCH, les premières informations de planification indiquant la première ressource SPS PDSCH configurée avec une première priorité ;
la détermination (203) que la première ressource SPS PDSCH chevauche la fenêtre de mesure dans le domaine temporel sur la base des informations de mesure et des premières informations de planification ; et
le maintien (204) de la communication de liaison descendante avec une cellule de desserte au moins sur une fenêtre de la première ressource SPS PDSCH en réponse à la détermination que la première ressource SPS PDSCH chevauche la fenêtre de mesure dans le domaine temporel ; le procédé étant
**caractérisé en ce que** le maintien (204) de la communication de liaison descendante avec la cellule de desserte au moins sur la fenêtre de la première ressource SPS PDSCH comprend : la détermination qu'un intervalle de temps entre deux premières ressources SPS PDSCH adjacentes d'au moins deux premières ressources SPS PDSCH dans la fenêtre de mesure est inférieur ou égal à un seuil de longueur de temps ; et le maintien de la communication de liaison descendante avec la cellule de desserte dans l'intervalle de temps sur la base de cette détermination.

2. Procédé selon la revendication 1, dans lequel la mesure de signal inter-fréquence comprend :
une mesure de signal de référence effectuée par l'UE sur une cellule inter-fréquence ; et/ou
une surveillance de bloc de signal synchronisé, SSB, effectuée par l'UE sur la cellule inter-fréquence.

3. Procédé selon la revendication 1 ou 2, comprenant en outre :
la réception de deuxièmes informations de planification associées à une deuxième ressource SPS PDSCH, les deuxièmes informations de planification indiquant la deuxième ressource SPS PDSCH configurée avec une deuxième priorité, et la première priorité étant supérieure à la deuxième priorité ;
la détermination que la deuxième ressource SPS PDSCH chevauche la fenêtre de mesure dans le domaine temporel sur la base des informations de mesure et des deuxièmes informations de planification ; et
en réponse à la détermination que la deuxième ressource SPS PDSCH chevauche la fenêtre de mesure dans le domaine temporel, le maintien de la mesure de signal inter-fréquence sur une partie chevauchante où la deuxième ressource SPS PDSCH chevauche la fenêtre de mesure dans le domaine temporel.

4. Procédé selon la revendication 3, dans lequel le maintien de la mesure de signal inter-fréquence sur la partie chevauchante où la deuxième ressource SPS PDSCH chevauche la fenêtre de mesure dans le domaine temporel comprend :
l'arrêt de la communication de liaison descendante avec la cellule de desserte sur la partie chevauchante où la deuxième ressource SPS PDSCH chevauche la fenêtre de mesure dans le domaine temporel.

5. Procédé selon la revendication 1 ou 2, dans lequel la première ressource SPS PDSCH est planifiée pour un premier type de service de communication, le premier type de service de communication ayant une priorité plus élevée qu'un deuxième type de dispositif de communication.

6. Procédé selon la revendication 1 ou 2, dans lequel la première ressource SPS PDSCH est configurée pour avoir la première priorité par le biais d'une signalisation de contrôle de ressource radio, RRC.

7. Procédé selon la revendication 1 ou 2, dans lequel le maintien de la communication de liaison descendante avec la cellule de desserte sur la première ressource SPS PDSCH comprend :
au moins l'arrêt de la mesure de signal inter-fréquence sur une partie chevauchante où la première ressource SPS PDSCH chevauche la fenêtre de mesure dans le domaine temporel.

8. Procédé de communication de données, effectué par une station de base, BS, le procédé comprenant :
la détermination (801) d'informations de mesure associées à une mesure de signal inter-fréquence, les informations de mesure indiquant au moins une fenêtre de mesure ;
la détermination (802) de premières informations de planification associées à une première ressource de canal partagé de liaison descendante physique à planification semi-persistante, SPS PDSCH, les premières informations de planification indiquant la première ressource SPS PDSCH configurée avec une première priorité ;
la détermination (803) que la première ressource SPS PDSCH chevauche la fenêtre de mesure dans le domaine temporel sur la base des informations de mesure et des premières informations de planification ; et
le maintien (804) de la communication de liaison descendante avec un équipement utilisateur, UE, au moins sur une fenêtre de la première ressource SPS PDSCH en réponse à la détermination que la première ressource SPS PDSCH chevauche la fenêtre de mesure dans le domaine temporel ; le procédé étant
**caractérisé en ce que** le maintien (804) de la communication de liaison descendante avec l'UE au moins sur la fenêtre de la première ressource SPS PDSCH comprend : la détermination qu'un intervalle de temps entre deux premières ressources SPS PDSCH adjacentes d'au moins deux premières ressources SPS PDSCH dans la fenêtre de mesure est inférieur ou égal à un seuil de longueur de temps ; et le maintien de la communication de liaison descendante avec l'UE dans l'intervalle de temps sur la base de cette détermination.

9. Procédé selon la revendication 8, dans lequel la mesure de signal inter-fréquence comprend :
une mesure de signal de référence effectuée par l'UE sur une cellule inter-fréquence ; et/ou une surveillance de bloc de signal synchronisé, SSB, effectuée par l'UE sur la cellule inter-fréquence.

10. Procédé selon la revendication 8 ou 9, dans lequel la première ressource SPS PDSCH ayant la première priorité comprend une ressource SPS PDSCH à haute priorité configurée par le biais d'une signalisation de contrôle de ressource radio, RRC.

11. Procédé selon la revendication 8 ou 9, comprenant en outre :
la détermination de deuxièmes informations de planification associées à une deuxième ressource SPS PDSCH, les deuxièmes informations de planification étant configurées pour indiquer la deuxième ressource SPS PDSCH configurée avec une deuxième priorité, et la première priorité étant supérieure à la deuxième priorité ;
la détermination que la deuxième ressource SPS PDSCH chevauche la fenêtre de mesure dans le domaine temporel sur la base des informations de mesure et des deuxièmes informations de planification ; et
en réponse à la détermination que la deuxième ressource SPS PDSCH chevauche la fenêtre de mesure dans le domaine temporel, l'arrêt de la communication de liaison descendante avec l'UE sur une partie chevauchante où la deuxième ressource SPS PDSCH chevauche la fenêtre de mesure dans le domaine temporel.

12. Dispositif de communication, qui est un équipement utilisateur, UE, ou une station de base, BS, respectivement, le dispositif comprenant un processeur (3020), un émetteur-récepteur (3016), une mémoire (3004), et un programme stocké sur la mémoire et exécutable par le processeur, dans lequel lorsque le processeur exécute le programme, le processeur est configuré pour effectuer le procédé de l'une quelconque des revendications 1 à 7 et 8 à 11.

13. Support de stockage, ayant un programme exécutable stocké dessus, dans lequel lorsque le programme exécutable est exécuté par un processeur d'un équipement utilisateur, UE, ou d'une station de base, BS, respectivement, le procédé de l'une quelconque des revendications 1 à 7 et 8 à 11 est effectué par ce processeur.
